# EUROPEAN PATENT SPECIFICATION

(11) **EP 3 870 510 B1**
(45) Date of publication and mention of the grant of the patent: **07.06.2023**
(21) Application number: 19794236.0
(22) Date of filing: 21.10.2019
(51) Int. Cl.: B64D 39/04

(54) **FUEL HOSE ASSEMBLY FOR IN-FLIGHT FUELLING OF AIRCRAFT**
KRAFTSTOFFSCHLAUCHANORDNUNG ZUR BETANKUNG VON FLUGZEUGEN WÄHREND DES FLUGS
ENSEMBLE FORMANT TUYAU SOUPLE DE CARBURANT POUR RAVITAILLEMENT DE CARBURANT EN VOL D'AÉRONEF

(30) Priority: 26.10.2018 GB 201817478
(43) Date of publication of application: 01.09.2021
(73) Proprietor: BRULIC LTD, Hove, East Sussex BN3 2FA (GB)
(72) Inventor: PITMAN, James, London W10 6EP (GB)
(74) Representative: Potter Clarkson
(86) International application number: PCT/GB2019/053002
(87) International publication number: WO 2020/084291

(56) References cited:
- EP-A1- 2 915 751
- EP-A2- 2 243 705
- GB-A- 1 302 270
- US-A1- 2006 178 560

## Description

### BACKGROUND OF THE INVENTION

The present invention relates to a fuel hose assembly for in-flight (re)fuelling of ai rcraft.

In-flight refuelling (IFR) involves the transfer of fuel from one aircraft (the "tanker") to another aircraft (the "receiver") during flight. IFR (also known as aerial refuelling or air-to-air refuelling) has become a well-established methodology used to extend the range or loiter time (or increase take-off payload) of military aircraft. Typically the tanker is based on an airliner which has been specially redesigned or converted for refuelling operations, while the receiver is usually a fighter aircraft, or possibly a bomber or reconnaissance aircraft.

Today there are two different IFR methods in widespread use: flying boom and probe-and-drogue.

The flying boom is attached at the rear of the tanker and comprises a rigid, telescopic and articulated tube having a nozzle at one end. The boom includes flight control surfaces which can be moved to create aerodynamic forces for controlling the boom in flight. For refuelling the receiver is firstly positioned in formation behind the tanker, which flies straight and level. A boom operator on-board the tanker then extends the boom and adjusts the flight control surfaces so that the nozzle is guided into a receptacle on the following receiver. Once the nozzle is securely inserted and locked in the receptacle, fuel is pumped from the tanker to the receiver. When the desired amount of fuel has been transferred, the nozzle is disconnected from the receptacle by the boom operator and the two aircraft are then free to break formation.

In the probe-and-drogue system the tanker aircraft is equipped with a flexible hose. The drogue (or basket), which resembles a shuttlecock, is attached to an end of the hose. The other end is attached to a hose drum unit (HDU), the hose being reeled on the HDU when not in use. The probe is a rigid, tubular arm which extends from the nose or fuselage of the receiver aircraft. The probe is typically retractable so that it can be stored away when not in use.

For refuelling the hose and drogue are trailed out behind and below the tanker while the tanker flies straight and level. The hose is stabilized in flight by the shuttlecock form of the drogue. The pilot of the receiver positions the receiver behind and below the tanker. The pilot then flies the receiver aircraft toward the tanker so that the extended probe is inserted into the funnel-shaped drogue. When the probe is properly engaged with the drogue, fuel is pumped from the tanker to the receiver. A motor in the HDU controls the hose to be retracted and extended as the receiver aircraft moves fore and aft, thereby maintaining the correct amount of tension to prevent undesirable bending of the hose. When the desired amount of fuel has been transferred, the probe is disconnected from the drogue and the two aircraft can break formation.

Unlike the flying boom system, the probe-and-drogue system has no need for a dedicated boom operator on-board the tanker aircraft. Also the tanker design is simpler. Furthermore the tanker can be provided with multiple hoses and drogues so that two or more receiver aircraft can be fuelled simultaneously, whereas the flying boom system can fuel only one receiver aircraft at a time. On the other hand, the fuel flow rate of the probe-and-drogue system is lower than that of the flying boom system, meaning longer fuelling times. In addition the probe-and-drogue system is more susceptible to adverse weather conditions and turbulence, and requires high levels of training and retraining of flight crews to connect the receiver aircraft to the drogue. Furthermore the probe-and-drogue system requires all receiver aircraft to be fitted with a re-fuelling probe.

While IFR has become routine for military aircraft, it has not been applied to any significant extent in commercial aircraft operations, despite huge potential benefits in terms of cost-savings due to reduced fuel consumption. One reason for this is that elements of the IFR systems themselves seem unsuitable for use with airliners. For example, the volume of fuel needed to be transferred to an airliner is much greater than that needed for, say, a fighter aircraft, and if fuelling is to be completed in a reasonable amount of time then the fuel hose will need to be made larger and more robust so that it is capable of operating at higher pressures. However this may be impractical because the hose becomes bulky and heavy. Also, for safety reasons the separation distance between commercial aircraft will need to be greater than that between military aircraft. This suggests a need for a longer hose, but this may be problematic because of the "whiplash" effect of length causing greater lateral movement of the flexible hose in the air.

For these reasons at least it seems the kinds of IFR systems used by military operators are unsuitable for use with large civil aircraft, and would be unlikely to receive safety certification for commercial airline operations.

The present invention therefore seeks to provide a fuel hose suitable for in-flight (re)fuelling of civil, as well as military, aircraft.

US patent 2006/178560 A1 discloses a surgical endoluminal tool deployment system wherein a body comprising a plurality of rigid parts is made as to form a lumen inside which surgical tools can be placed. An actuator may be used to longitudinally displace the rigid parts.

European Patent 2 915 751 A1 describes a hose and drogue system for in-flight refuelling of aircraft. A fuel hose is used to carry fuel, and additionally is loaded in tension by a drum device.

European Patent 2 243 705 A2 discloses a boom drogue adaptor for in-flight refuelling. A hose and drogue system is attached via an adaptor to a distal end of a refuelling boom, wherein the adaptor may provide a biasing force to move the hose in relation to the boom.

United Kingdom Patent 1 302 270 A4 discloses a pipe connector for use inside an aircraft, comprising rigid pipe sections joined together by sealed joints. The pipe sections are tensioned together via turnbuckles. The tension and relative distance between sections is not adjustable in flight.

### SUMMARY OF THE INVENTION

According to an aspect of the invention, there is provided a fuel hose assembly for inflight fuelling of aircraft, comprising: a flexible inner tube for conveying fuel under pressure; an outer cover comprising a plurality of rigid parts; and an actuator configured to move the rigid parts lengthwise along the flexible inner tube, wherein: the rigid parts are movable by the actuator to provide continuous lengthwise cover over the flexible inner tube, so as to be able to resist radial expansion of the flexible inner tube when the flexible inner tube is pressurised; and the rigid parts are further movable by the actuator to uncover lengthwise portions of the flexible inner tube between the rigid parts, so as to allow bending of the flexible inner tube when the flexible inner tube is unpressurised.

As used herein with regard to the rigid parts of the fuel hose assembly, "rigid" means sufficiently rigid or stiff to be able to resist the radial pressure of fuel in the flexible inner tube in order to prevent (or at least limit) undesirable radial expansion of the flexible inner tube.

In a first (compressed) condition the rigid parts are brought together to form a contiguous line along the flexible inner tube in the axial direction, thereby providing continuous coverage along the outer cylindrical surface of the flexible inner tube. When fuel is passed through the flexible inner tube, such as during an inflight (re)fuelling operation, a radial pressure is exerted on the wall of the flexible inner tube by the fuel. The radial pressure is contained by the rigid parts, thereby preventing (or at least limiting) radial expansion (bulging) of the flexible inner tube. Significant radial expansion of the flexible inner tube is undesirable because it could lead to rupture (catastrophic structural failure) of the inner tube.

Since the fuel pressure is contained by the outer rigid parts, rather than by the wall of the flexible inner tube itself, the wall may be made relatively thin. Thus the fuel hose assembly is capable of handling high pressure levels without becoming excessively bulky.

As well as providing the pressure-containment function, when in the first (compressed) condition the outer rigid parts also endow the fuel hose assembly with longitudinal rigidity (i.e. stiffness along the length of the fuel hose assembly), which enhances the stability of the fuel hose assembly in the air and prevents (or at least reduces) the undesirable "whiplash" effect. Thus the fuel hose assembly is less susceptible than conventional fuel hoses to adverse weather conditions and turbulence, and the enhanced stability of the fuel hose assembly in the air means that the level of pilot skill and training required to connect to the hose may be lower.

In a second (relaxed) condition the rigid parts are separated from each other by gaps. In this condition the fuel hose assembly is susceptible to bending and can therefore be conveniently reeled on a hose drum unit which is installed in an ai rcraft.

Thus the rigid parts are selectively movable by the actuator, to provide continuous external lengthwise cover along the flexible inner tube so as to resist outward expansion of the flexible inner tube under fuel pressure, and to uncover lengthwise sections of the flexible inner tube between the rigid parts so as to allow bending of the flexible inner tube when the fuel pressure is removed.

Hence the invention provides a fuel hose assembly which can handle high fuel pressure and flow rate yet is not excessively bulky, has a high degree of lengthwise stiffness and stability when extended in the air, and can be conveniently stored in a space-efficient manner when not in use. The fuel hose assembly is therefore highly suitable for use in commercial (as well as military) inflight fuelling operations, in connection with both piloted and unpiloted aircraft.

The rigid parts may be coaxial and concentric with the flexible inner tube.

Each one of the rigid parts may be movable toward another one of the rigid parts in order to provide the continuous lengthwise cover over the flexible inner tube; and the each one of the rigid parts may be movable away from another one of the rigid parts in order to uncover the lengthwise portions of the flexible inner tube between the rigid parts.

Each one of the rigid parts may be configured to engage with another one of the rigid parts in order to provide the continuous lengthwise cover over the flexible inner tube.

Each one of the rigid parts may be configured to releasably lock with another one of the rigid parts in order to provide the continuous lengthwise cover over the flexible inner tube.

Each one of the rigid parts may be movable to partially overlap another one of the rigid parts in order to provide the continuous lengthwise cover over the flexible inner tube. The overlapping may be provided by the use of male and female forms of the rigid parts. For example one end of each rigid part might provide a male connection while the other end provides a female connection. Or some of the rigid parts might have male connections at both of their ends while the others of the rigid parts have female connections at both of their ends, the male and female rigid parts being placed alternately along the flexible inner tube.

Various such arrangements are envisaged and all are within the scope of the claimed invention, provided that the rigid parts partially overlap each other.

Each one of the plurality of rigid parts may be a discrete element which is distinct from the other rigid parts.

The rigid parts may comprise similarly shaped segments of the outer cover.

Each one of the plurality of rigid parts may be integral with another one of the rigid parts.

The plurality of rigid parts may collectively define a helical form of the outer cover.

The actuator may comprise: a first control cord configured to move the rigid parts to cover over the flexible inner tube; and a second control cord and a plurality of associate cords configured to move the rigid parts to uncover the lengthwise portions of the flexible inner tube.

A first end of each one of the associate cords may be connected to a respective one of the rigid parts and a second end of each one of the associate cords may be connected to an end region of the second control cord.

Each one of the rigid parts may comprise a profile configured for aerodynamic stabilisation of the fuel hose in flight.

Each one of the rigid parts may comprise a drag surface for providing aerodynamic assistance to the actuator for moving the rigid parts lengthwise along the flexible inner tube.

The fuel hose assembly may comprise a further flexible inner tube for conveying fuel under pressure, the rigid parts being movable by the actuator to cover over both of the flexible inner tubes and to uncover the lengthwise portions of both of the flexible inner tubes.

### BRIEF DESCRIPTION OF THE DRAWINGS

Examples will now be described, with reference to the accompanying figures in which:
Figure 1 shows a fuel tanker aircraft comprising a fuel hose assembly according to a first example of the invention;
Figures 2a and 2b show the fuel hose assembly in a flexible condition;
Figure 2c shows cross-sections of a rigid segment of the fuel hose assembly;
Figures 3a and 3b show the fuel hose assembly in a rigid condition;
Figures 4a and 4b show a means for providing additional rigid segments to the fuel hose assembly;
Figure 5 shows a second example of a fuel hose assembly; and
Figures 6a-c show a means for providing a rigid collar to the fuel hose assembly.

### DETAILED DISCUSSION

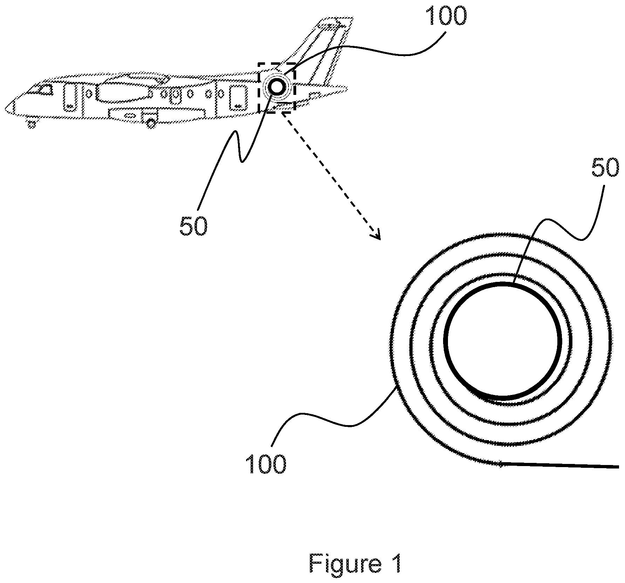

Figure 1 shows a fuel tanker aircraft comprising a fuel hose assembly 100 which is coiled on a motorised hose drum unit 50 and is provided with a fuel supply carried by the tanker aircraft.

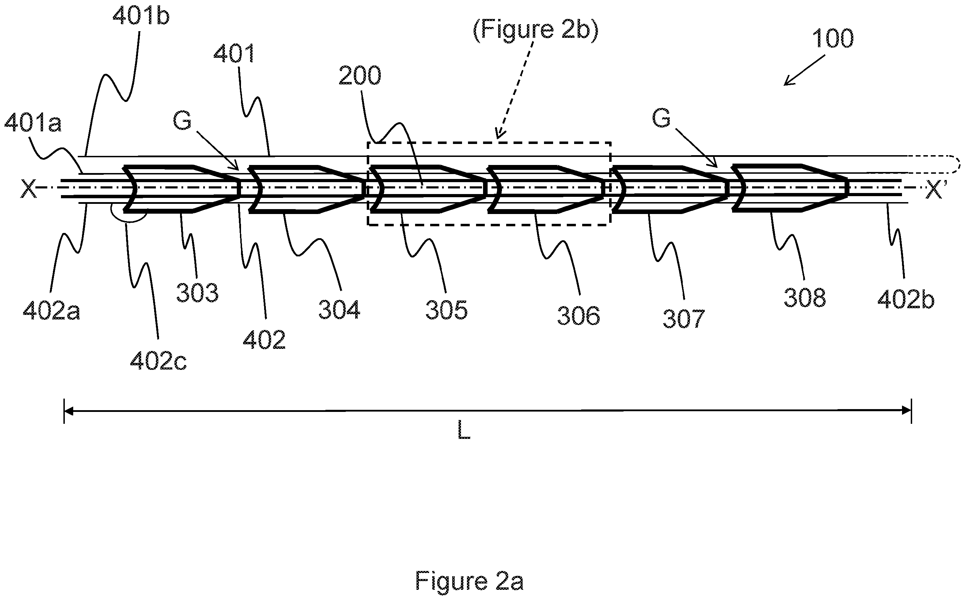

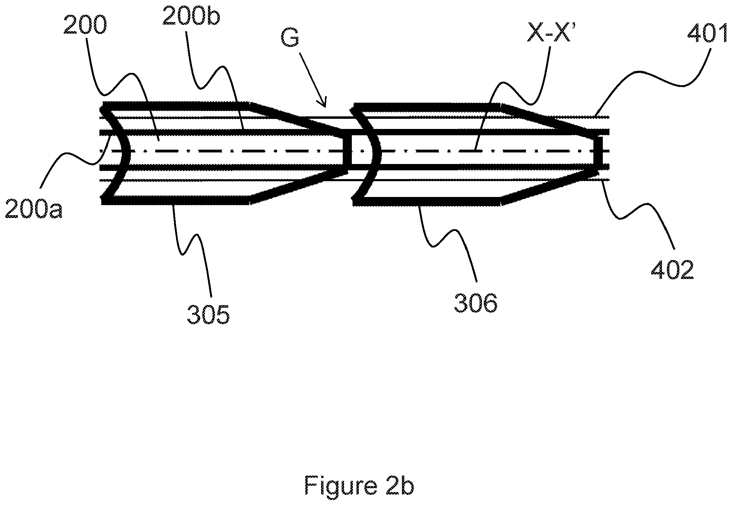

Figure 2a shows an exemplary portion of the fuel hose assembly 100, the portion having a length L and a longitudinal axis X-X'. The fuel hose assembly 100 comprises an elongate, tubular core 200, a plurality of rigid segments 301-311, and first and second control cords 401, 402 and associate cords (only one of the associate cords 402c being shown in Figure 2a). The rigid segments 301-311 are separated (spaced apart) by gaps G. It will be understood that only some of the rigid segments 303-308 of the fuel hose assembly 100 are visible in Figure 2a because the figure shows only a portion of the fuel hose assembly 100. For ease of understanding of the following description, Figure 2b shows an enlarged detail of part of the fuel hose assembly 100 of Figure 2a.

The tubular core 200 comprises an inner cylindrical surface 200a and an outer cylindrical surface 200b. In this example the tubular core 200 has a length of about 15 m, an outside diameter of about 66 mm, and an inside diameter (or bore diameter) of about 60 mm. Accordingly the tubular core 200 has a wall thickness (i.e. distance between the inner cylindrical surface 200a and the outer cylindrical surface 200b) of about 6 mm. In this example the tubular core 200 is constructed from rubber materials, for example nitrile rubber, such that the tubular core 200 is flexible (i.e. may be caused to bend and/or twist) and resilient. The tubular core 200 is suitable for fuelling an aircraft with a fuel, for example a liquid fuel, for example kerosene, or a gaseous fuel.

The rigid segments 301-308 are structurally and functionally similar to each other. One of the rigid segments 306 will now be described in isolation by way of example. It will be understood that the exemplary rigid segment 306 is representative of the other, similar rigid segments 301-305, 307, 308 and therefore these are also described. It will be further understood that this and other examples of the invention may comprise almost any number of the rigid segments, for example tens or hundreds.

In the following description the terms "front" and "rear", "left" and "right", and "upper" and "lower" are used merely for convenience of explanation and are not limiting with regard to the claimed invention.

The exemplary rigid segment 306 comprises a tubular body having centre and rear parts which are cylindrical and a front part (toward the right in Figures 2a and 2b) which forms a truncated cone. In this example the rigid segment 306 is constructed from carbon composite materials. Alternatively the rigid segment 306 may be constructed from some other high-strength, rigid and lightweight material, for example a metal alloy such as a titanium alloy, or a polymer.

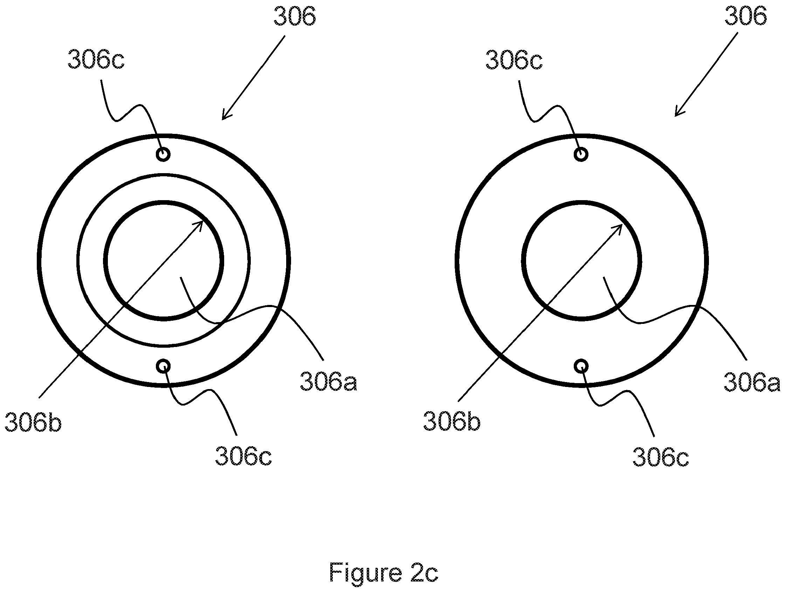

Referring also to Figure 2c, the right-hand part of which shows a front view of the tubular body and the left-hand part of which shows a rear view, a through-bore 306a (not visible in Figures 2a and 2b) having a circular cross-section extends between openings at the front and rear of the body. At the front and centre parts of the body the through-bore 306a has a constant diameter, while at the rear part of the body the bore 306a widens (diverges) and reaches a maximum diameter at the rear opening of the body. The widening (divergent) part of the bore 306a is sized and shaped to snugly receive the (truncated cone-shaped) front part of another one of the rigid segments.

The exemplary rigid segment 306 surrounds (encircles) a particular portion of the tubular core 200 of the fuel hose assembly 100. The exemplary rigid segment 306 is thus co-axial and concentric with the tubular core 200. The diameter of that part of the through-bore 306a which extends through the front and centre parts of the body (i.e. the part of the bore 306a having a constant diameter) is sized to be substantially the same as the outside diameter of the tubular core 200. Thus, with respect to the front and centre parts of the body of the rigid segment 306, an inner surface 306b of the body (i.e. the wall which defines the through-bore 306a of the body) is in touching contact with the outer cylindrical surface 200b of the tubular core 200. Accordingly the inner surface 306b of the body is located radially of and immediately adjacent to the outer cylindrical surface 200b and extends lengthwise along the outer cylindrical surface 200b. The contact is sufficiently light that the friction between the surfaces 306b, 200b can be overcome so as to cause the body of the rigid segment 306 to slide (axially) along (over) the outer cylindrical surface 200b of the tubular core 200, as will be described later herein. An end-most rigid segment 311 (to the right in the sense of Figure 2a but not shown therein) is fixedly secured to the tubular core 200. Different from the other rigid segments 301-310, this fixed rigid segment 311 is not axially movable relative to the tubular core 200.

The exemplary rigid segment 306 further comprises a pair of narrow bores or channels 306c (see Figure 2c) for receiving the control cords 401, 402. The two channels 306c are located 180 degrees from each other around the circumference of the body, i.e. such that the channels 306c are opposite each other. The control cords 401, 402 will now be described.

Referring again to Figure 2a, the first control cord 401 extends from its first end 401a (to the left in the sense of Figure 2a) through the upper channels 306c of the rigid segments 301-311 (from left to right) and loops around a pulley (not shown) so as to extend back in the opposite direction (from right to left) to its second end 401b. The first control cord 401 is free to slide in the upper channels 306c in the axial direction. The first end 401a is slightly enlarged so that it cannot enter the upper channel 306c of the nearest rigid segment 301.

The second control cord 402 extends from its first end 402a (to the left in the sense of Figure 2a) through the lower channels 306c of the rigid segments 301-311 (from left to right) to its second end 402b. The second control cord 402 is free to slide in the lower channels 306c in the axial direction. The second end 402b is slightly enlarged so that it cannot enter the lower channel 306c of the nearest rigid segment 311. Each one of the rigid segments 301-311 is connected to the first end 402a of the second control cord 402 by an associate cord (for the sake of clarity of the drawing only one of the associate cords 402c is shown in Figure 2a). The associate cords are of different lengths, the shortest one connecting the first end 402a of the second control cord 402 to the nearest rigid segment 301 and the longest one connecting the first end 402a of the second control cord 402 to the furthest rigid segment 311, the intermediate associate cords being of progressively longer length. When the rigid segments 301-308 are separated by the gaps G (as shown in Figure 2a) each one of the associate cords 402c is in a taut (extended) condition.

In this example the first and second control cords 401, 402 and the associate cords comprise steel cables. Alternatively the cords 401, 402 may be constructed from some other material having high tensile strength and flexibility, e.g. carbon fibre composite.

In Figure 2a the tubular core 200 is devoid of fuel. Furthermore the rear part of each one of the rigid segments 304-308 is separated from the front part of the adjacent rigid segment 303-307 by a gap G. Due to the presence of the gaps G between the rigid segments 303-308, and also the flexible nature of the tubular core 200, the fuel hose assembly 100 may be caused to bend by the application of a bending force. The bending force will cause the longitudinal axis X-X' of the fuel hose assembly 100 to be changed from a straight line to a curved line. Thus it will be understood that, as shown in Figure 2a, the fuel hose assembly 100 is in a relaxed condition in which it is susceptible to bending. Put more simply, the fuel hose assembly 100 is in a bendable state. Accordingly the fuel hose assembly 100 may be conveniently reeled (coiled) onto the motorised hose drum unit 50 which is installed in the tanker aircraft (see Figure 1).

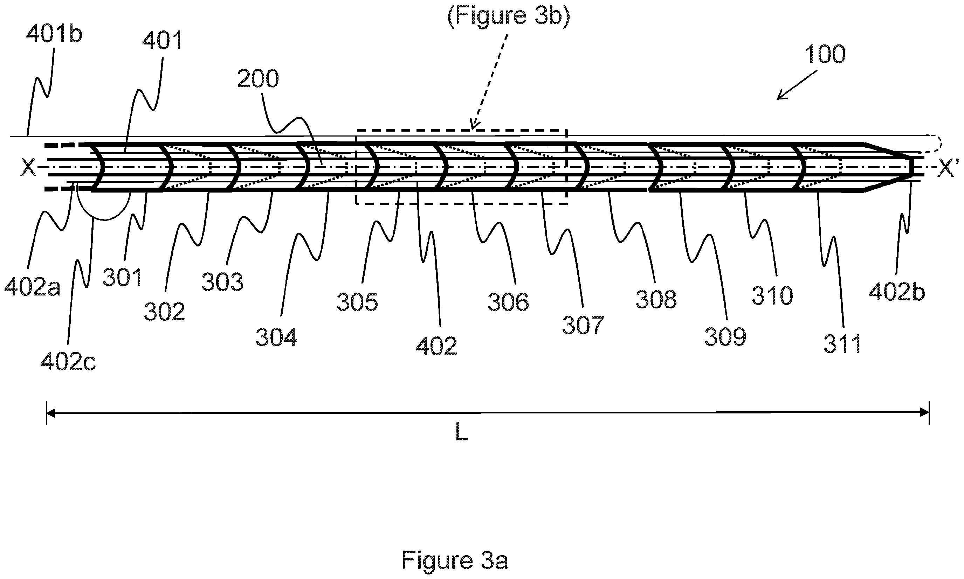

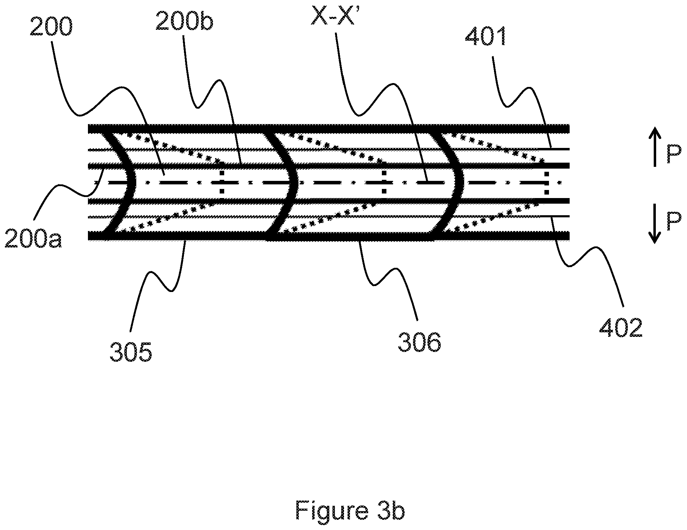

The use of the fuel hose assembly 100 in an aircraft inflight (re)fuelling operation will now be described, with reference also to Figures 3a and 3b. For ease of understanding of the following description, Figure 3b shows an enlarged detail of part of the fuel hose assembly 100 as shown in Figure 3a.

Firstly the fuel tanker aircraft and a fuel receiver aircraft are established in a flight formation wherein the two aircraft are controlled to remain in a fixed position relative to each other. The fuel hose assembly 100 is then extended (unreeled or uncoiled) from the motorised hose drum unit 50 of the tanker aircraft toward the receiver aircraft.

Once the fuel hose assembly 100 is extended in the air, a pulling force is applied to the second end 401b of the first control cord 401 (to the left in the sense of Figures 2a and 3a). Due to the pulley arrangement the upper part of the first control cord 401 is displaced in the pulling direction (to the left) while the lower part of the first control cord 401 is displaced in the opposite direction (to the right) through the upper channels 306c of the rigid segments 301-311. Thus the upper part of the first control cord 401 is lengthened while the lower part is shortened.

When the enlarged part of the first end 401a of the first control cord 401 reaches and comes into contact with the first rigid segment 301, the continued pulling force overcomes the friction force which exists between the inner surface 306b of the body of the first rigid segment 301 and the outer cylindrical surface 200b of the tubular core 200. Thus the first rigid segment 301 is moved (to the right) toward the second (adjacent) rigid segment 302. The truncated cone form of the front part of the first rigid segment 301 helps to guide the front part into the rear part of the second rigid segment 302. Thus the front part of the first rigid segment 301 is snugly received in the rear part of the second rigid segment 302, the front part being in abutment with the wall of the bore 306a of the rear part. That is, the two segments 301, 302 are in touching contact with each other. The gap G which previously existed between the first rigid segment 301 and the second rigid segment 302 is thus closed (eliminated).

As the pulling force on the first control cord 401 continues, the first and second rigid segments 301, 302 slide axially over the tubular core 200 (to the right). In a similar manner as before, the front part of the second rigid segment 302 is snugly received in the rear part of the third rigid segment 303, the front part being in abutment with the wall of the bore 306a of the rear part. The gap G which previously existed between the second rigid segment 302 and the third rigid segment 303 is thus closed (eliminated).

The pulling force on the first control cord 401 is continued until all but the end-most rigid segment 311 (which it will be recalled is fixed to the tubular core 200) have been axially displaced (to the right) relative to the tubular core 200 and brought together to close the gaps G. Thus the rigid segments 301-311 (which in this example are unitary elements) are placed along the tubular core 200 in a contiguous line. In this position (see Figure 3a) the constant-diameter bore sections of the rigid segments 301-311 are joined together to provide a constant-diameter bore which extends continuously between the two end-most rigid segments 301, 311 of the fuel hose assembly 100. Furthermore, the inner surfaces 306b (bore walls) of the bodies of the contiguous rigid segments 301-311 are in touching contact with the outer cylindrical surface 200b of the tubular core 200, and together they provide continuous coverage along the outer cylindrical surface 200b in the axial direction.

Once the rigid segments 301-311 have been closed (compressed) together as described above, the portion of the tubular core 200 (to the left in the sense of Figure 3a) which was initially covered by the first rigid segment 301 will be exposed. As will be explained later herein, during fuelling operations the length of the tubular core 200 is to be covered in order to contain pressure exerted on the tubular core 200 by fuel flowing therein. In this example additional rigid segments are provided for this purpose, as follows.

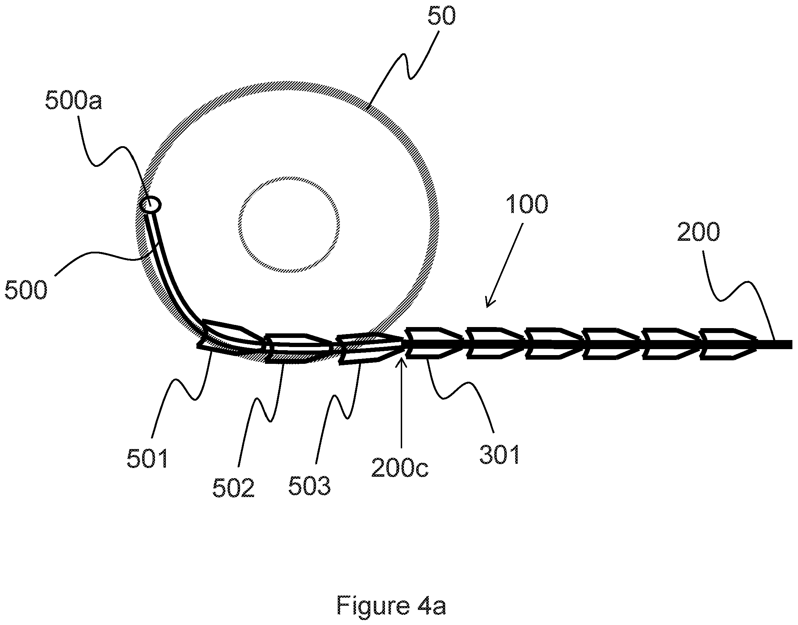

Figure 4a shows the fuel hose assembly 100 uncoiled from the motorised hose drum unit 50, prior to the closure (compression) of the rigid segments 301-311 as described herein above. An end of the tubular core 200 (the left end in the sense of Figures 2a and 3a) is joined by joining means 200c to a distal end of a rigid tube 500 having substantially the same outside diameter and internal bore as the tubular core 200. The joining means 200c may be a screw thread connector, or an adhesive bond, or the like. A proximate end of the rigid tube 500 comprises an inlet 500a for receiving fuel from a storage tank onboard the tanker aircraft. The rigid tube 500 is disposed at the outer rim of the motorised hose drum unit 50. Furthermore the rigid tube 500 forms part of the motorised hose drum unit 50 and is rotatable therewith. In this example the rigid tube 500 is constructed from steel. Alternatively the rigid tube 500 may be constructed from some other strong (pressure resistant) material, for example carbon fibre composite.

Additional rigid segments 501-503 are provided on the distal end portion of the rigid tube 500, which has a small radius of curvature (exaggerated in Figure 4a). The additional rigid segments 501-503 are generally structurally similar to the rigid segments 301-311 described herein above, except for a slightly enlarged through-bore which enables the additional rigid segments 501-503 to be slid over the slightly curved distal end portion of the rigid tube 500. Alternatively the end portion of the rigid tube 500 may be made straight, in which case the enlarged through-bore is not required.

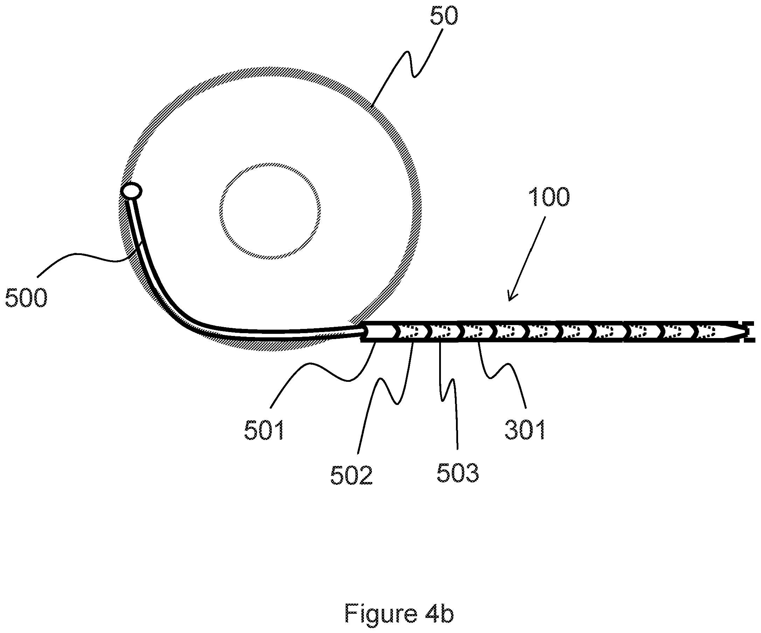

When the rigid segments 301-311 have been closed (compressed) over the tubular core 200, as described herein above, the additional rigid segments 501-503 are slid axially over the rigid tube 500 (to the right in the sense of Figure 4a) and onto the exposed end of the tubular core 200. In this example the additional rigid segments 501-503 slide onto the tubular core 200 under gravity and/or their own forward momentum, as the rigid tube 500 rotates with the motorised hose drum unit 50 and comes to a halt once the fuel hose assembly 100 is fully uncoiled. Alternatively the additional rigid segments 501-503 may be configured to be moved onto the tubular core 200 using the control cords 401, 402. In this way the outer cylindrical surface 200b of the end part of the tubular core 200 is covered by the contiguous additional segments 501-503, as shown in Figure 4b. Thus the full axial length of the tubular core 200 is continuously covered, by the combination of the contiguous rigid segments 301-311 and additional segments 501-503.

Thus the fuel hose assembly 100 is in a rigid (stiffened) condition in which it resists bending. That is, the fuel hose assembly 100 is in a non-bendable state. In this state the fuel hose assembly 100 has a structural load bearing resistance akin to a rigid boom. The stability of the fuel hose assembly 100 in the air is thus enhanced.

The distal end (to the right in the sense of Figure 3a) of the fuel hose assembly 100 is guided toward a rigid fuel nozzle of the receiver aircraft. A drogue (not shown in the figures) may be provided on the fuel hose assembly 100 for this purpose. The distal end of the tubular core 200 is received in the rigid fuel nozzle, whose end is shaped to abut with the front part of the endmost rigid segment 311. The two aircraft are thus tethered together by the fuel hose assembly 100. A fuel, for example liquid kerosene, is pumped through the tubular core 200 (from left to right in the sense of Figure 3a) under pressure. The gauge pressure level of the fuel in the tubular core 200 may be in the region of about 690 to 1380 kPa (about 6.9 to 13.8 bars or 100 to 200 psi).

The fuel exerts a pressure P in a radial direction (i.e. normal to the longitudinal axis X-X') on the inner cylindrical surface 200a of the tubular core 200. The radial pressure P is transmitted through the wall of the tubular core 200 and tends to urge the outer cylindrical surface 200b outwardly. Since the outer cylindrical surface 200b is in touching contact with the inner surfaces 306b (bore walls) of the bodies of the contiguous rigid segments 301-311, the rigid segments 301-311 resist the radial pressure so as to prevent undesirable outward displacement (bulging or expansion) of the outer cylindrical surface 200b. In other words, the rigid segments 301-311 contain the fuel pressure P in the tubular core 200.

Since, in this example, the additional rigid segments 501-503 have a slightly enlarged through-bore, the end portion of the tubular core 200 which is covered by the additional rigid segments 501-503 will expand slightly in the radial direction, but the expansion will be minimal and within tolerable limits. Indeed, it will be understood that, prior to fuel pressurisation, a small (part-) circumferential clearance gap might exist between the outer cylindrical surface 200b of the tubular core 200 and the inner surfaces 306b (bore walls) of one or more of the rigid segments 301-311. Any such small gap will be filled by radial expansion of the tubular core 200 when pressurised with fuel, the amount of expansion being minimal and within tolerable limits. The selection of the construction materials for the tubular core and the rigid parts will preferably take account of the coefficients of expansion of the materials (including at temperatures experienced at altitudes where in-flight fuelling operations will take place) in order to ensure that any clearance gaps are within design tolerances.

When the required amount of fuel has been transferred from the tanker aircraft to the receiver aircraft, the distal end (to the right in the sense of Figure 3a) of the tubular core 200 is disconnected from the fuel nozzle of the receiver aircraft. The two aircraft are thus untethered and are free to break formation. The tubular core 200 is vented to remove residual fuel. Accordingly the radial pressure that had been applied by the fuel is removed and the resilient tubular core 200 is relaxed. Small clearance gaps might then exist between the outer cylindrical surface 200b of the tubular core 200 and the inner surfaces 306b (bore walls) of any of the rigid segments 301-311, as discussed herein above.

A pulling force is applied to the first end 402a of the second control cord 402 (to the left in the sense of Figures 2a and 3a). Thus the second control cord 402 is axially displaced through the lower channels 306c of the rigid segments 301-308 in the pulling direction (to the left). As the second control cord 402 is displaced the slack in the associate cords, which connect the second control cord 402 to the rigid segments 301-311, is taken up. Thus the associate cords become taut and continued pulling of the second control cord 402 causes the rigid segments 301-311 to disengage from each other and to slide axially along the tubular core 200 (to the left).

The pulling force on the second control cord 402 is continued until all of the associate cords are extended such that the gaps G are re-established between the rigid segments 301-311. That is, lengthwise sections of the tubular core 200 are uncovered (revealed). The movement (to the left) of the first rigid segment 301 also causes the first control cord 401 to be drawn back to its original position (see Figure 2a). (Alternatively the first control cord 401 may be pulled back to its original position before the pulling force is applied to the second control cord 402). Also the additional rigid elements 501-503 are slid back off the tubular core 200 onto the rigid tube 500. Thus the fuel hose assembly 100 is returned to the condition shown in Figure 2a. That is, the fuel hose assembly 100 is returned to a bendable state. Accordingly the deformable fuel hose assembly 100 is reeled back onto the motorised hose drum unit 50 of the tanker aircraft.

It will be understood that the particular spacing of the rigid segments 303-308 shown in Figure 2a is illustrative only and is not necessarily optimal for bending deformation of the fuel hose assembly 100.

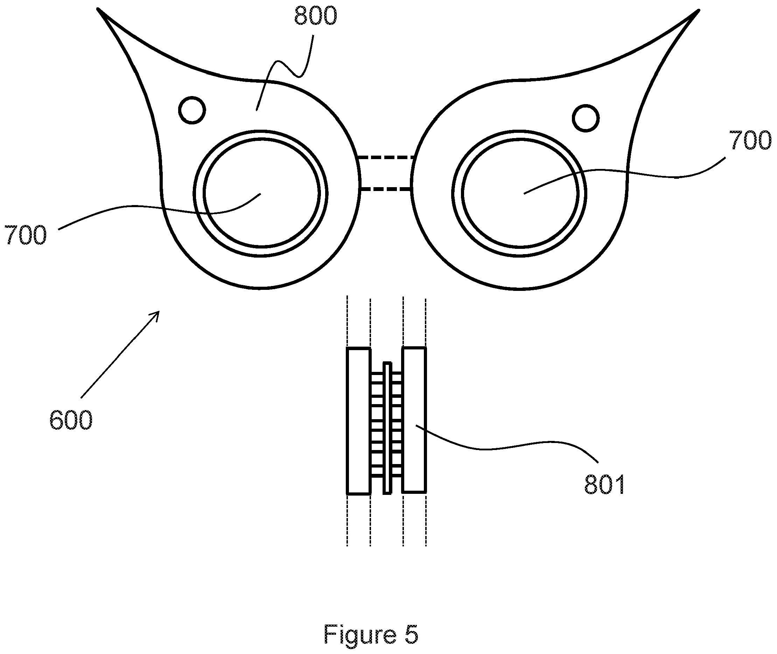

Referring now to Figure 5, in another example a fuel hose assembly 600 comprises two tubular cores 700 which are similar to that described herein above. In this double-hose configuration control cords pass through the rigid segments 800 and are operable to move the rigid segments along the tubular cores 700 in the manner described herein above. Each one of the rigid segments 800 comprises two partially-cylindrical parts which surround the respective tubular cores 700. The partially-cylindrical parts are connected by a bridge part 801 comprising a rigid lattice structure 701. Each of the partially-cylindrical parts comprises a tapered profile to provide the fuel hose assembly 600 with enhanced stability in the air.

It will be understood that the invention has been described in relation to its preferred examples and may be modified in many different ways without departing from the scope of the invention as defined by the accompanying claims.

While in the above-described first example the exposed end portion of the tubular core is provided with additional rigid segments from a rigid tube which forms part of the motorised hose drum unit, in other examples the exposed end of the tubular core is protected from fuel pressurisation by other means, for example as follows.

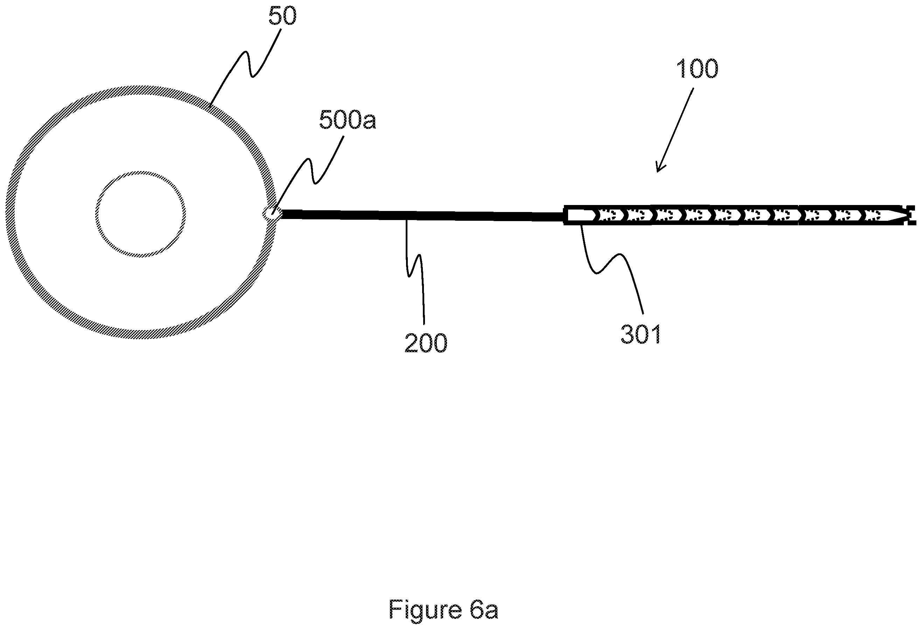

Referring to Figure 6a, the rigid segments 301-311 have been closed (compressed) together using the first control cord 401 as described herein above. An end of the tubular core 200 (to the left in the sense of Figure 6a) is connected to a fuel inlet 500a of the motorised hose drum unit 50. Thus an exposed (uncovered) portion of the tubular core 200 extends between the endmost rigid segment 301 and said end of the tubular core 200.

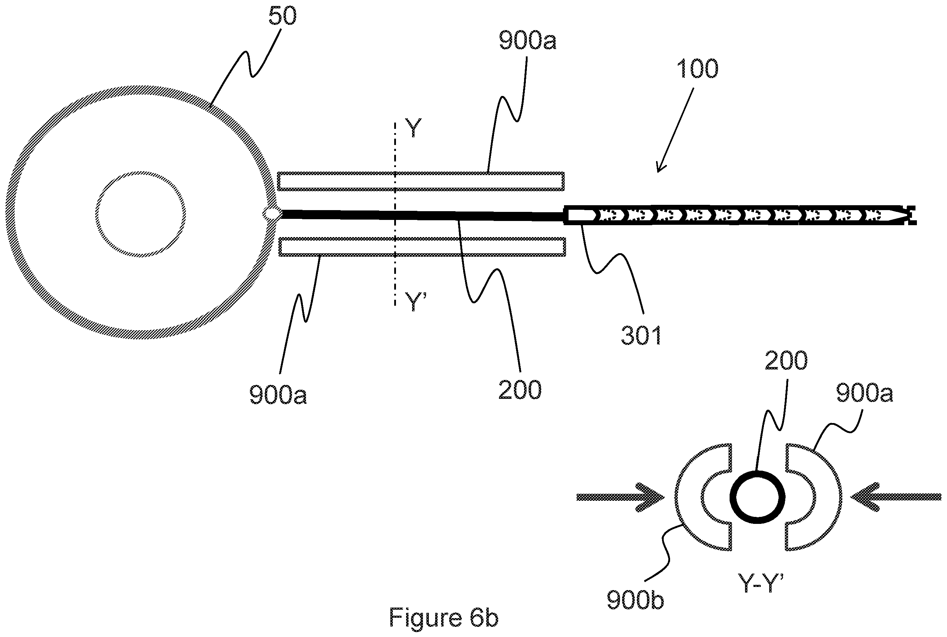

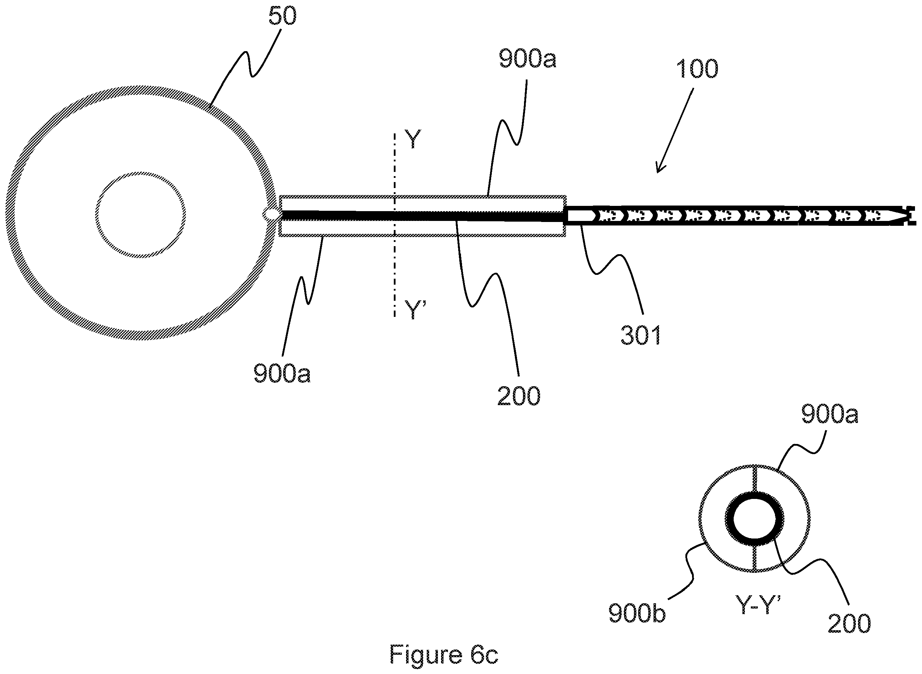

Turning to Figures 6a and 6b, each one of a pair of elongate cylindrical half-shells 900a, 900b is positioned laterally of the tubular core 200. In this example the half-shells 900a, 900b are constructed from steel. Alternatively the half-shells 900a, 900b may be constructed from some other strong (pressure resistant) material, for example carbon fibre composite. The half-shells 900a, 900b are directed laterally (inwards) toward the tubular core 200 (as indicated by the arrows in Figure 6b) and brought into contact with each other (as shown in Figure 6c) so as to surround (encircle) the tubular core 200. In this example the half-shells 900a, 900b are supported and moved by actuators (not shown in the figures), which are controlled by the crew of the tanker aircraft or may be automatically operated on completion of the closure (compression) of the rigid segments 301-311.

The interior curved surfaces of the half-shells 900a, 900b thus form an axial through-bore having a constant-diameter which is substantially the same as the outside diameter of the tubular core 200. Accordingly in this closed position the interior curved surfaces of the half-shells 900a, 900b are in touching contact with the outer cylindrical surface 200b of the tubular core 200, such that the half-shells 900a, 900b provide a close-fitting collar on the tubular core 200. Furthermore the full axial length of the tubular core 200 is continuously covered, by the combination of the contiguous rigid segments 301-311 and the pair of half-shells 900a, 900b. Thus the fuel hose assembly 100 is in a rigid (stiffened) condition in which it resists bending, as described herein above.

During fuelling operations, the radial pressure, which is exerted by the fuel on the inner cylindrical surface 200a of (the portion of) the tubular core 200 (which is covered by the half-shells 900a, 900b), is contained by the rigid interior curved surfaces of the half-shells 900a, 900b, in the same manner that the pressure is contained by the inner surfaces 306b (bore walls) of the bodies of the contiguous rigid segments 301-311. In this regard the half-shells 900a, 900b are functionally the same as the rigid segments 301-311.

In this example the actuators are able to exert an inward force to resist the radial fuel pressure, such as to prevent the half-shells 900a, 900b from being displaced outwardly away from the tubular core 200. Alternatively the half-shells 900a, 900b may be configured to releasably lock together, such that no inwardly-acting force by the actuators is required to keep the half-shells 900a, 900b fixed in place relative to the tubular core 200. In such an example the actuators may be laterally separated from the half-shells 900a, 900b, after the half-shells 900a, 900b have been releasably locked together and before the tubular core 200 is pressurised.

Once fuelling operations have been completed and the tubular core 200 has been relieved of the fuel pressure, the half-shells 900a, 900b are moved laterally away from the tubular core 200 by the actuators and returned to their original position. The rigid segments can then be relaxed (separated from each other) using the control cords 401, 402 in the manner described herein above. In an example, the control cords 401, 402 extend through axial channels provided in the half-shells 900a, 900b.

Besides the additional rigid segments 501-503 and the half shells 900a, 900b described herein above, other means of covering the exposed end portion of the tubular core 200 prior to pressurisation are envisaged. All of these are within the scope of the claimed invention, provided that they function to contain the fuel pressure and enhance the rigidity of the fuel hose assembly 100.

In the above-described first example the second control cord extends through the lower channels of the rigid segments. While this may help to guide the path of the rigid segments, it will be understood that the cord does not need to extend through the channels in this way in order to perform its function of separating the rigid segments. Therefore in an example the lower channels of the rigid segments are omitted and the second control cord extends along the hose assembly 100 externally of the rigid segments.

In an example the second control cord is attached to only one associate cord, which is attached in turn to the first rigid segment. The first rigid segment is attached to the second rigid segment by another associate cord, and the second rigid segment is attached to the third rigid segment by yet another associate cord, and so on such that all of the rigid segments are successively attached. As each rigid segment is axially displaced along the tubular core, it will tend to pull the next rigid segment with it as the associate cord which connects the rigid segments becomes taut. In this way the gaps between the rigid segments are provided.

While in the above-described first example the rigid segments are actuated by two control cords (and associate cords), it will be understood that the actuator may comprise a different number of cords, including a single cord, for moving the rigid segments. Furthermore some of the rigid segments may be actuated by one or more cords, while others of the rigid segments may be actuated by one or more different cords. Examples are envisaged wherein each one of a plurality of cords is connected by associate cords to a particular set of the rigid segments, such that each set of the rigid segments may be controlled independently of other sets of the rigid segments. All of these cord arrangements are within the scope of the claimed invention, with regard to both single-hose and multi-hose assemblies, provided that they are capable of selectively moving the rigid segments together to provide continuous lengthwise cover over the tubular core, and moving the rigid segments apart to uncover portions of the tubular core between the rigid parts so as to allow bending of the tubular core.

While in the above-described first example each one of the rigid segments is of unitary construction, in another example each rigid segment comprises two or more discrete parts which are joined together to form the rigid segment. For example the truncated cone front part may be made separately from the remainder of the body of the rigid segment and then joined thereto.

The wall which forms the bore of the body of the rigid segment, which is in contact with the outer cylindrical surface of the tubular core, may comprise a different material from the remainder of the rigid segment. For example the wall of the bore may comprise a relatively more rigid material, such as a metal alloy, while another part of the rigid segment may comprise a relatively less rigid material, such as a polymer. In this way the wall of the bore will be rigid enough to contain the pressure applied by the fuel in the tubular core, while the outside of the rigid segment may be relatively resilient and therefore able to absorb knocks or impacts from other objects in use.

In the above-described first example the front parts of the rigid segments are received in the rear parts of the adjacent rigid segments such that the rigid segments partially overlap each other when compressed together. In another example there is no overlap between adjacent rigid segments when the gaps between the rigid segments are closed. In one such example the rigid segments are simple cylinders whose ends abut each other in order to close the gaps without overlap.

In an example the rigid segments are configured to releasably lock together when they are compressed to close the gaps. For example, a circumferential lip may be provided on the truncated cone shaped front part of each rigid segment, and a complementary circumferential groove provided in the wall of the bore at the widened rear of rigid segment, so that when the front part is inserted in the rear part the lip will engage with the groove to lock the rigid segments together. The lip can then be released from the groove by sufficient pulling force applied to the second control cord. Alternatively the rigid segments may be locked together under the application of the radial fuel pressure on the tubular core, and released from each other as the pressure is removed.

In an example a lubricant is provided between the rigid segments and the tubular core, for easing the passage of the rigid segments over the tubular core to open and close the gaps between the rigid segments. The lubricant may comprise an oil or a gel. The lubricant may comprise a surface coating, for example a PTFE layer, on one or both of the rigid segments and the tubular core. In a similar manner a lubricant may be provided to assist the passage of the control cords through the axial channels of the rigid segments.

While in the above-described first example the fuel hose assembly comprises a plurality of rigid segments of similar shape and size, it will be understood that the assembly may instead comprise rigid parts of differing shape and/or size, including differing axial length. A large variety of forms of rigid parts is envisaged, including forms which may improve aerodynamic stability or provide lift to the fuel hose assembly in the air. The rigid parts may be shaped to cause drag from the air in order to assist the movement of the rigid parts along the tubular core under the pulling force of the control cords. Different shapes of the rigid parts may be selected such that when they are compressed together they form the fuel hose assembly into a predetermined shape, for example having curves in one or more planes, which may assist in the aerodynamic stability or the stiffness of the fuel hose assembly. Or different shapes of the rigid parts may be selected to account for a longitudinal profile of the compressed fuel hose assembly that is suited to use under certain conditions, e.g. airspeed. All of these different shapes and size of the rigid parts are within the scope of the claimed invention, with regard to both single-hose and multi-hose assemblies, provided that they can be selectively moved together to provide continuous lengthwise cover over the tubular core, and moved apart to uncover portions of the tubular core between the rigid parts so as to allow bending of the tubular core.

While in the above-described first example the axial lengths of the gaps are uniform such that the rigid segments are regularly spaced, in another example at least one of the gaps has a different axial length from the other gaps such that the rigid segments are irregularly spaced.

In the above-described first example the fuel hose assembly comprises a plurality of discrete (distinct) rigid segments which come together to form a continuous outer cover over the tubular core. In another example a plurality of rigid parts are connected such as to collectively define a continuous helix (coil) around the tubular core, the helix being extendable and compressible (by control cords as described herein above) to open and close gaps between portions of the helix.

While in the above-described second example the fuel hose assembly comprises two tubular cores, in other examples a multi-fuel hose assembly comprises a greater number of tubular cores, for instance three, four, five, six, seven, eight, nine, ten, or more, tubular cores. Such multi-fuel hose arrangements may enable a greater overall flow rate of fuel to the receiver aircraft. Furthermore the respective tubular cores of the multi-fuel hose may be used for different types of fuel, for example different kinds of liquid fuels and/or different kinds of gaseous fuels, or other consumables in liquid or gaseous form (e.g. water) and with the different tubular cores able to operate in different flow directions simultaneously.

In an example, the rigid segments are provided with electrical contacts which provide an electrical path along the length of the fuel hose assembly for confirming the engagement (and disengagement) of the rigid segments. The confirmation may be by means of an audible or visual indication, e.g. a light on a control panel of the tanker aircraft.

In an example, the fuel hose assembly comprises lightning-dissipation means for protection against a lightning strike. For example, a fine metal mesh may be located under the surface of each one the rigid segments and the meshes connected together via contact points between the rigid segments.

In an example, the control cords are omitted and electromagnets or solenoids are disposed at both ends of each rigid segment, powered by insulated cables which run through the rigid segments from the tanker aircraft. In order to compress the segments together, the solenoids are actuated to magnetically attract the rigid segments together. In order to reverse this procedure, the polarity of each opposing solenoid is reversed so that the magnetic fields repel the rigid segments away from each other, fixed cords between each segment being provided for limiting the spacing between the rigid segments when repelled from each other.

In an example, the fuel hose assembly and the motorised hose drum unit are provided in a fuel receiver aircraft (rather than a fuel tanker aircraft), and the fuel hose assembly is connected to a fuel tanker aircraft for fuelling operations.

## Claims

1. A fuel hose assembly (100) for inflight fuelling of aircraft, comprising:
a flexible inner tube (200) for conveying fuel under pressure;
an outer cover comprising a plurality of rigid parts (301-311); and
an actuator configured to move the rigid parts (301-311) lengthwise along the flexible inner tube (200),
wherein:
the rigid parts (301-311) are movable by the actuator to provide continuous lengthwise cover over the flexible inner tube (200), so as to be able to resist radial expansion of the flexible inner tube (200) when the flexible inner tube (200) is pressurised; and
the rigid parts (301-311) are further movable by the actuator to uncover lengthwise portions of the flexible inner tube (200) between the rigid parts (301-311), so as to allow bending of the flexible inner tube (200) when the flexible inner tube (200) is unpressurised.

2. A fuel hose assembly (100) according to claim 1, wherein the rigid parts (301-311) are coaxial and concentric with the flexible inner tube (200).

3. A fuel hose assembly (100) according to claim 1 or 2, wherein:
each one of the rigid parts (301-311) is movable toward another one of the rigid parts in order to provide the continuous lengthwise cover over the flexible inner tube (200); and
the each one of the rigid parts is movable away from another one of the rigid parts in order to uncover the lengthwise portions of the flexible inner tube between the rigid parts.

4. A fuel hose assembly (100) according to any preceding claim, wherein each one of the rigid parts (301-311) is configured to engage with another one of the rigid parts in order to provide the continuous lengthwise cover over the flexible inner tube (200).

5. A fuel hose (100) assembly according to any preceding claim, wherein each one of the rigid parts (301-311) is configured to releasably lock with another one of the rigid parts in order to provide the continuous lengthwise cover over the flexible inner tube (200).

6. A fuel hose assembly (100) according to any preceding claim, wherein each one of the rigid parts is movable to partially overlap another one of the rigid parts (301-311) in order to provide the continuous lengthwise cover over the flexible inner tube (200).

7. A fuel hose assembly (100) according to any preceding claim, wherein each one of the plurality of rigid parts (301-311) is a discrete element which is distinct from the other rigid parts.

8. A fuel hose assembly (100) according to claim 7, wherein the rigid parts (301-311) comprise similarly shaped segments of the outer cover.

9. A fuel hose assembly (100) according to any one of claims 1 to 6, wherein each one of the plurality of rigid parts (301-311) is integral with another one of the rigid parts.

10. A fuel hose assembly (100) according to claim 9, wherein the plurality of rigid parts (301-311) collectively define a helical form of the outer cover.

11. A fuel hose (100) according to any preceding claim, wherein the actuator comprises:
a first control cord (401) configured to move the rigid parts (301-311) to cover over the flexible inner tube (200); and
a second control cord (402) and a plurality of associate cords (402c) configured to move the rigid parts to uncover the lengthwise portions of the flexible inner tube.

12. A fuel hose assembly (100) according to claim 11, wherein a first end of each one of the associate cords (401c) is connected to a respective one of the rigid parts (301-311) and a second end of each one of the associate cords is connected to an end region of the second control cord (402).

13. A fuel hose assembly (100) according to any preceding claim, wherein each one of the rigid parts (301-311) comprises a profile configured for aerodynamic stabilisation of the fuel hose in flight.

14. A fuel hose assembly (100) according to any preceding claim, wherein each one of the rigid parts (301-311) comprises a drag surface for providing aerodynamic assistance to the actuator for moving the rigid parts lengthwise along the flexible inner tube (200).

15. A fuel hose assembly (600) according to any preceding claim, comprising a further flexible inner tube (700) for conveying fuel under pressure, wherein the rigid parts (800) are movable by the actuator to cover over both of the flexible inner tubes (700) and to uncover the lengthwise portions of both of the flexible inner tubes.

## Patentansprüche

1. Kraftstoffschlauchanordnung (100) zur Betankung von Flugzeugen während des Flugs, umfassend:
ein flexibles Innenrohr (200) zum Fördern von Kraftstoff unter Druck;
eine äußere Abdeckung, die eine Vielzahl von starren Teilen (301-311) umfasst; und
ein Betätigungselement, das konfiguriert ist, um die starren Teile (301-311) entlang des flexiblen Innenrohrs (200) in Längsrichtung zu bewegen,
wobei:
die starren Teile (301-311) durch das Betätigungselement bewegbar sind, um eine durchgehende Abdeckung in Längsrichtung über dem flexiblen Innenrohr (200) bereitzustellen, um in der Lage zu sein, einer radialen Ausdehnung des flexiblen Innenrohrs (200) zu widerstehen, wenn das flexible Innenrohr (200) unter Druck steht; und
die starren Teile (301-311) weiter durch das Betätigungselement bewegbar sind, um Längsabschnitte des flexiblen Innenrohrs (200) zwischen den starren Teilen (301-311) freizulegen, um ein Biegen des flexiblen Innenrohrs (200) zu ermöglichen, wenn das flexible Innenrohr (200) nicht unter Druck steht.

2. Kraftstoffschlauchanordnung (100) nach Anspruch 1, wobei die starren Teile (301-311) koaxial und konzentrisch mit dem flexiblen Innenrohr (200) sind.

3. Kraftstoffschlauchanordnung (100) nach Anspruch 1 oder 2, wobei:
jedes der starren Teile (301-311) in Richtung zu einem anderen der starren Teile bewegbar ist, um die durchgehende Abdeckung in Längsrichtung über dem flexiblen Innenrohr (200) bereitzustellen; und
jedes der starren Teile in Richtung weg von einem anderen der starren Teile bewegbar ist, um die Längsabschnitte des flexiblen Innenrohrs zwischen den starren Teilen freizulegen.

4. Kraftstoffschlauchanordnung (100) nach einem verstehenden Anspruch, wobei jedes der starren Teile (301-311) konfiguriert ist, um mit einem anderen der starren Teile in Eingriff zu kommen, um die durchgehende Abdeckung in Längsrichtung über dem flexiblen Innenrohr (200) bereitzustellen.

5. Kraftstoffschlauch (100)-Anordnung nach einem verstehenden Anspruch, wobei jedes der starren Teile (301-311) konfiguriert ist, um mit einem anderen der starren Teile lösbar zu verriegeln, um die durchgehende Abdeckung in Längsrichtung über dem flexiblen Innenrohr (200) bereitzustellen.

6. Kraftstoffschlauchanordnung (100) nach einem verstehenden Anspruch, wobei jedes der starren Teile bewegbar ist, um ein anderes der starren Teile (301-311) teilweise zu überlappen, um die durchgehende Abdeckung in Längsrichtung über dem flexiblen Innenrohr (200) bereitzustellen.

7. Kraftstoffschlauchanordnung (100) nach einem verstehenden Anspruch, wobei jedes der Vielzahl von starren Teilen (301-311) ein diskretes Element ist, das sich von den anderen starren Teilen unterscheidet.

8. Kraftstoffschlauchanordnung (100) nach Anspruch 7, wobei die starren Teile (301-311) ähnlich geformte Segmente der äußeren Abdeckung umfassen.

9. Kraftstoffschlauchanordnung (100) nach einem der Ansprüche 1 bis 6, wobei jedes der Vielzahl von starren Teilen (301-311) mit einem anderen der starren Teile einstückig ist.

10. Kraftstoffschlauchanordnung (100) nach Anspruch 9, wobei die Vielzahl von starren Teilen (301-311) zusammen eine schraubenförmige Form der äußeren Abdeckung definieren.

11. Kraftstoffschlauch (100) nach einem verstehenden Anspruch, wobei das Betätigungselement umfasst:
eine erste Steuerschnur (401), die konfiguriert ist, um die starren Teile (301-311) zu bewegen, um das flexible Innenrohr (200) zu überdecken; und
eine zweite Steuerschnur (402) und eine Vielzahl von dazugehörigen Schnüren (402c), die konfiguriert sind, um die starren Teile zu bewegen, um die Längsabschnitte des flexiblen Innenrohrs freizulegen.

12. Kraftstoffschlauchanordnung (100) nach Anspruch 11, wobei ein erstes Ende jeder der dazugehörigen Schnüre (401c) mit einem jeweiligen der starren Teile (301-311) verbunden ist und ein zweites Ende jeder der dazugehörigen Schnüre mit einem Endbereich der zweiten Steuerschnur (402) verbunden ist.

13. Kraftstoffschlauchanordnung (100) nach einem verstehenden Anspruch, wobei jedes der starren Teile (301-311) ein Profil umfasst, das zur aerodynamischen Stabilisierung des Kraftstoffschlauchs während des Flugs konfiguriert ist.

14. Kraftstoffschlauchanordnung (100) nach einem verstehenden Anspruch, wobei jedes der starren Teile (301-311) eine Strömungswiderstandsoberfläche zum Bereitstellen aerodynamischer Unterstützung für das Betätigungselement zum Bewegen der starren Teile in Längsrichtung entlang des flexiblen Innenrohrs (200) umfasst.

15. Kraftstoffschlauchanordnung (600) nach einem verstehenden Anspruch, umfassend ein weiteres flexibles Innenrohr (700) zum Fördern von Kraftstoff unter Druck, wobei die starren Teile (800) durch das Betätigungselement bewegbar sind, um beide der flexiblen Innenrohre (700) zu überdecken und um die Längsabschnitte von beiden der flexiblen Innenrohre freizulegen.

## Revendications

1. Assemblage de tuyau de carburant (100) pour le ravitaillement en vol d'un aéronef, comprenant :
un tube interne flexible (200) pour transporter le carburant sous pression ;
un revêtement externe comprenant une pluralité de pièces rigides (301-311) ; et
un actionneur conçu pour déplacer les pièces rigides (301-311) dans le sens de la longueur le long du tube interne flexible (200),
dans lequel :
les pièces rigides (301-311) sont déplaçables par l'actionneur pour fournir un revêtement longitudinal continu sur le tube interne flexible (200), de manière à pouvoir résister à l'expansion radiale du tube interne flexible (200) lorsque le tube interne flexible (200) est sous pression ; et
les pièces rigides (301-311) sont en outre déplaçables par l'actionneur pour découvrir des parties longitudinales du tube interne flexible (200) entre les pièces rigides (301-311), de manière à permettre la flexion du tube interne flexible (200) lorsque le tube interne flexible (200) n'est pas sous pression.

2. Assemblage de tuyau de carburant (100) selon la revendication 1, dans lequel les pièces rigides (301-311) sont coaxiales et concentriques avec le tube interne flexible (200).

3. Assemblage de tuyau de carburant (100) selon la revendication 1 ou 2, dans lequel :
chacune des pièces rigides (301-311) est mobile vers une autre des pièces rigides afin de fournir le revêtement longitudinal continu sur le tube interne flexible (200) ; et
chacune des pièces rigides peut être éloigné d'une autre des pièces rigides afin de découvrir les portions longitudinales du tube interne flexible entre les pièces rigides.

4. Assemblage de tuyau de carburant (100) selon une quelconque revendication précédente, dans lequel chacune des pièces rigides (301-311) est conçue pour venir en prise avec une autre des pièces rigides afin de fournir le revêtement longitudinal continu sur le tube interne flexible (200).

5. Assemblage de tuyau de carburant (100) selon une quelconque revendication précédente, dans lequel chacune des pièces rigides (301-311) est conçue pour se verrouiller de façon détachable avec une autre des pièces rigides afin de fournir le revêtement longitudinal continu sur le tube interne flexible (200).

6. Assemblage de tuyau de carburant (100) selon une quelconque revendication précédente, dans lequel chacune des pièces rigides est mobile pour chevaucher partiellement une autre des pièces rigides (301-311) afin de fournir le revêtement longitudinal continu sur le tube interne flexible (200).

7. Assemblage de tuyau de carburant (100) selon l'une quelconque des revendications précédentes, dans lequel chacune de la pluralité de pièces rigides (301-311) est un élément discret qui est distinct des autres pièces rigides.

8. Assemblage de tuyau de carburant (100) selon la revendication 7, dans lequel les pièces rigides (301-311) comprennent des segments de forme similaire du revêtement extérieur.

9. Assemblage de tuyau de carburant (100) selon l'une quelconque des revendications 1 à 6, dans lequel chacune de la pluralité de pièces rigides (301-311) est solidaire d'une autre des pièces rigides.

10. Assemblage de tuyau de carburant (100) selon la revendication 9, dans lequel la pluralité de pièces rigides (301-311) définissent collectivement une forme hélicoïdale du revêtement extérieur.

11. Tuyau de carburant (100) selon une quelconque revendication précédente, dans lequel l'actionneur comprend :
un premier cordon de commande (401) conçu pour déplacer les pièces rigides (301-311) afin de recouvrir le tube interne flexible (200) ; et
un second cordon de commande (402) et une pluralité de cordons associés (402c) conçus pour déplacer les pièces rigides afin de découvrir les parties longitudinales du tube interne flexible.

12. Assemblage de tuyau de carburant (100) selon la revendication 11, dans lequel une première extrémité de chacun des cordons associés (401c) est raccordée à l'une respective des pièces rigides (301-311) et une seconde extrémité de chacun des cordons associés est raccordée à une région d'extrémité du second cordon de commande (402)

13. Assemblage de tuyau de carburant (100) selon une quelconque revendication précédente, dans lequel chacune des pièces rigides (301-311) comprend un profil conçu pour la stabilisation aérodynamique du tuyau de carburant en vol.

14. Assemblage de tuyau de carburant (100) selon une quelconque revendication précédente, dans lequel chacune des pièces rigides (301-311) comprend une surface de traînée pour fournir une assistance aérodynamique à l'actionneur pour déplacer les pièces rigides dans le sens de la longueur le long du tube interne flexible (200) .

15. Assemblage de tuyau de carburant (600) selon une quelconque revendication précédente, comprenant un autre tube interne flexible (700) pour transporter du carburant sous pression, dans lequel les pièces rigides (800) sont mobiles par l'actionneur pour recouvrir les deux tubes internes flexibles (700) et découvrir les parties longitudinales des deux tubes internes flexibles.
